# EUROPÄISCHE PATENTSCHRIFT

(11) **EP 3 395 602 B1**
(45) Veröffentlichungstag und Bekanntmachung des Hinweises auf die Patenterteilung: **17.11.2021**
(21) Anmeldenummer: 18167689.1
(22) Anmeldetag: 17.04.2018
(51) Int. Cl.: B60K 37/06

(54) **BEDIENSYSTEM FÜR EIN FAHRZEUG**
OPERATING SYSTEM FOR A VEHICLE
SYSTÈME DE COMMANDE POUR UN VÉHICULE

(30) Priorität: 26.04.2017 DE 102017004031
(43) Veröffentlichungstag der Anmeldung: 31.10.2018
(73) Patentinhaber: MAN Truck & Bus SE, 80995 München (DE)
(72) Erfinder: Mohra, Holger, 80805 München (DE); Arnold, Claus, 93161 Sinzing (DE); Güllich, Johannes, 85229 Markt Indersdorf (DE); Ochs, Thomas, 82178 Puchheim (DE); Zademach, Martin, 85232 Bergkirchen (DE)
(74) Vertreter: v. Bezold & Partner Patentanwälte - PartG mbB

(56) Entgegenhaltungen:
- DE-A1-102010 012 240
- DE-A1-102010 055 132
- DE-T5-112014 006 474
- US-A1- 2008 309 475

## Beschreibung

### Beschreibung

Die Erfindung betrifft ein Bediensystem für ein Fahrzeug zur Auswahl und Ausgabe von bestimmten Fahrzeugfunktionalitäten und/oder Informationen.

Solche Bediensysteme bilden in Fahrzeugen eine Benutzerschnittstelle bzw. eine Mensch-Maschinen-Schnittstelle, über die ein Nutzer Einfluss auf fahrzeugintegrierte Funktionen nehmen oder Informationen über eine bestimmte Fahrzeugfunktion abrufen kann. Wesentliche Bestandteile des Bediensystems sind eine Eingabeeinrichtung, eine Anzeigevorrichtung und eine Steuervorrichtung, wobei die Eingabeeinrichtung und die Anzeigevorrichtung an die Steuervorrichtung gekoppelt sind und die Steuervorrichtung derart ausgestaltet ist, dass sie - insbesondere abhängig von einer Eingabe des Nutzers mittels der Eingabeeinrichtung - eine Anzeige auf der Anzeigevorrichtung steuert bzw. kontrolliert.

So sind aus der Praxis Anzeigevorrichtungen derartiger Bediensysteme bekannt, bei denen herkömmliche analoge Tachometer und Drehzahlmesser durch digitale Rundinstrumente als Teil eines Kombiinstruments einer multifunktionalen digitale Anzeige- oder Instrumententafel des Kraftfahrzeugs ersetzt werden. Das Kombiinstrument basiert hierbei auf einem großflächigen Bildschirm, z. B. in Form eines TFT-Displays. Derartige Kombiinstrumente werden auch als digitale oder virtuelle Cockpits oder frei programmierbare Kombiinstrumente (FPK) bezeichnet.

Dabei sind die Anzeigevorrichtungen bzw. Bildschirme in Fahrzeugen oftmals durch bauliche Gegebenheiten in ihrer Größe beschränkt. Gleichzeitig nimmt die Anzahl der potentiell abrufbaren Funktionen oder Informationen, die an das Bediensystem gekoppelt sind, sukzessive zu, so dass es der Stand der Technik vorsieht, Informationen und/oder auswählbare Funktionen zu gruppieren und in Subgruppen unter einem Oberbegriff (Auswahlmenü) zu sammeln, wodurch der Nutzer am Bediensystem über den Oberbegriff zu der gewünschten Information oder Funktion durchnavigieren kann.

Die wachsende Anzahl an Anzeigen im Kombiinstrument von Fahrzeugen führt zu teilweise unübersichtlichen und schwer nachvollziehbaren Menüstrukturen. Zudem wurden durch die allmähliche Umstellung von analogen auf digitale Anzeigen Kombinationen der beiden Systeme angewandt, die in Bezug auf Bedienung, Anordnung und Optik oft Nachteile mit sich bringen. Zahlreiche Funktionen müssen mit wenigen Bedienelementen auf dem Multifunktionslenkrad, teilweise auch während der Fahrt, angesteuert und eingestellt werden. Um dem Fahrer dies ohne unnötige Ablenkung zu ermöglichen, haben Fahrzeughersteller verschiedene Ansätze entwickelt, die sich hauptsächlich in der Anordnung der Informationen und der Menüführung im Kombiinstrument unterscheiden.

In der DE 10 2010 055132 A1 wird beispielsweise ein Kombiinstrument mit einem Hauptanzeigebereich zwischen zwei Rundanzeigen beschrieben, in dem Anzeigeobjekte zweier Teilmengen von Informationen, einerseits aus ein Fahrerassistenzsystem und andererseits aus einer Infotainmenteinrichtung, bei einer Bedienaktion des Fahrers jeweils von dem neuen Anzeigeobjekt vollständig verdrängt werden. Insbesondere, zeigt dieses Dokument ein Bediensystem für ein Fahrzeug zur Auswahl und Ausgabe von bestimmten Fahrzeugfunktionalitäten und/oder Informationen, umfassend eine Anzeigevorrichtung mit einer Anzeigefläche; eine Eingabeeinrichtung zur Markierung und/oder Auswahl eines auf der Anzeigefläche angezeigten Elements durch einen Nutzer; eine Steuervorrichtung, die an die Anzeigevorrichtung und die Eingabeeinrichtung angekoppelt ist und mit der eine wiedergebende Anzeige auf der Anzeigefläche steuerbar ist, wobei die Anzeigefläche durch die Steuervorrichtung derart ansteuerbar ist, dass auf der Anzeigefläche ein erstes Rundinstrument zur Anzeige eines Drehzahlmessers oder eines Tachometers und eine Fahrzeuganzeige zur Anzeige mindestens eines Zustands eines Fahrerassistenzsystems und/oder einer Fahrzeugumgebung angezeigt werden.

In der US 2008/309475 A1 wird eine Anzeigeeinheit beschrieben, in der bei einem Wechsel von einem ersten zu einem zweiten Anzeigemodus die analogen Rundinstrumentanzeigen für Drehzahlmesser und Fahrzeuggeschwindigkeit entweder vollständig ausgelöscht oder in Größe und Position verändert werden, um zwischen sich beispielsweise ein Nachtsichtbild anzuzeigen.

Die aus der Praxis bekannten Ansätze weisen jedoch oftmals eine unübersichtliche Anordnung der zahlreichen Menüpunkte und Informationen auf, was zu einem schwierigen Auffinden einzelner Unterpunkte in den umfangreichen Menübäumen führt. Auch sind optisch "sperrige" Kombinationslösungen aus digitalen und analogen Anzeigen bekannt. Ein weiterer Nachteil bekannter Ansätze besteht darin, dass unruhige Animationen und eine Reizüberflutung den Fahrer nicht nur viel Zeit kosten, sondern ihn vom aktuellen Verkehr ablenken, wodurch ein Unfallrisiko steigt.

Ein weiterer Nachteil bei aus der Praxis bekannten Bediensystemen mit digitalem oder virtuellem Cockpit ist, dass oftmals Anzeigebereiche im Cockpit, die wichtige Betriebsinformationen enthalten, überblendet werden, wenn Detailinformationen zu bestimmten Fahrzeugfunktion aufgerufen werden, wobei sich eine Anzeigetafel zur Anzeige der Detailinformationen im virtuellen Cockpit öffnet.

Es ist somit eine Aufgabe der Erfindung, ein verbessertes Bediensystem für ein Kraftfahrzeug bereitzustellen, mit dem Nachteile herkömmlicher Techniken vermieden werden können. Die Aufgabe der Erfindung ist es insbesondere, ein Bediensystem bereitzustellen, mit dem eine Vielzahl unterschiedlicher für den Fahrbetrieb relevante Informationen bei Bedarf darstellbar ist, ohne dass vorbestimmte fixe Anzeigeelemente überblendet werden, und unter Reduzierung eines Ablenkungsrisikos des Fahrers.

Diese Aufgabe wird durch ein Bediensystem mit den Merkmalen des unabhängigen Anspruchs gelöst. Vorteilhafte Ausführungsform und Anwendungen der Erfindung ergeben sich aus den anhängigen Ansprüchen und werden in der folgenden Beschreibung unter teilweiser Bezugnahme auf die Figuren näher erläutert.

Gemäß allgemeinen Gesichtspunkten der Erfindung wird ein Bediensystem für ein Fahrzeug zur Auswahl und Ausgabe von bestimmten Fahrzeugfunktionalitäten und/oder Informationen bereitgestellt. Das Bediensystem umfasst eine Anzeigevorrichtung mit einer Anzeigefläche, eine Eingabeeinrichtung zur Markierung und/oder Auswahl eines auf der Anzeigefläche angezeigten Elements durch einen Nutzer und eine Steuervorrichtung, die an die Anzeigevorrichtung und die Eingabeeinrichtung angekoppelt ist. Das Element kann ein Informationselement, z. B. eine Auswahloption, ein Listenelement, etc. sein oder ein Navigationsobjekt, z. B. ein Auswahlknopf, ein Navigationspfeil etc. Mit der Steuervorrichtung ist eine wiedergebende Anzeige auf der Anzeigefläche steuerbar. Dadurch lassen sich beispielsweise von der Eingabeeinrichtung kommende Befehle durch die Steuervorrichtung auf der Anzeigefläche visualisieren. Unter Steuern ist dabei grundsätzlich sowohl eine Veranlassung einer Anzeige auf der Anzeigefläche als auch eine Modifikation des auf der Anzeigefläche Dargestellten zu verstehen. Hierbei ist die Anzeigefläche durch die Steuervorrichtung derart ansteuerbar, dass auf der Anzeigefläche ein erstes Rundinstrument zur Anzeige eines Drehzahlmessers oder eines Tachometers, eine Fahrzeuganzeige zur Anzeige mindestens eines Zustands eines Fahrerassistenzsystems und/oder einer Fahrzeugumgebung und eine zwischen dem ersten Rundinstrument und der Fahrzeuganzeige angeordnete erste Informationstafel angezeigt werden. Die erste Informationstafel wird nachfolgend auch als erstes Vorhangfenster bezeichnet. Der Begriff "Rundinstrument" umfasst auch eine Darstellung des Tachometers oder Drehzahlmessers als Halbrundinstrument, z. B. in Form eines Teilkreises, oder allgemein gekrümmte Skalen in Kombination mit einem Zeiger, der auf den aktuellen Geschwindigkeitswert oder Drehzahlwert zeigt.

Unter der Fahrzeuganzeige, nachfolgend auch als zentrale Fahrzeuganzeige bezeichnet, wird ein Teilbereich der Anzeigefläche verstanden, der von der Steuervorrichtung so angesteuert wird, dass dort mindestens ein Zustand und/oder Informationen eines Fahrerassistenzsystems und/oder einer Fahrzeugumgebung angezeigt werden. Die Fahrzeuganzeige kann als Informationsfenster und/oder Teilbereich der Fahrzeuganzeige ausgeführt sein. Die Fahrzeuganzeige kann beispielsweise einen Eingriff des Spurhalteassistenten oder die gewählte Stufe der Abstandsregelung anzeigen.

Die erste Informationstafel ist wahlweise in einem geöffneten Zustand, in welchem die erste Informationstafel Detailinformationen anzeigt, und in einem geschlossenen Zustand, in welchem die erste Informationstafel eine zusammenfassende Inhaltsübersicht und/oder eine Vorschauinformation anzeigt, anzeigbar. Die zusammenfassende Inhaltsübersicht und/oder die Vorschauinformation weist auf in dem geöffneten Zustand anzeigbare Detailinformationen hin. Mit anderen Worten kann ein Nutzer anhand der zusammenfassenden Inhaltsübersicht bereits im geschlossenen Zustand der Informationstafel erkennen, welche Art von Detailinformationen im geöffneten Zustand bereitgestellt werden. Im geschlossenen Zustand ist der von der ersten Informationstafel benötigte Darstellungsbereich auf der Anzeigefläche kleiner als im geöffneten Bereich.

Mittels einer Betätigung der Eingabeeinrichtung ist ein Wechsel vom geschlossenen zum geöffneten Zustand und umgekehrt auslösbar. Hierbei wird beim Wechsel eine animierte Öffnungsbewegung erzeugt, bei der die erste Informationstafel durch eine Aufziehbewegung der ersten Informationstafel in Richtung der Fahrzeuganzeige vergrößert wird und dabei die Fahrzeuganzeige auf der Anzeigefläche verschiebt, derart, dass diese weiterhin angezeigt wird.

Ein Vorteil der Erfindung liegt einerseits darin, dass der von der ersten Informationstafel beanspruchte Darstellungsbereich auf der Anzeigefläche vergrößert werden kann. Dadurch können bei Bedarf im geöffneten Zustand Detailinformationen angezeigt werden. Gleichzeitig kann unabhängig von Anzeigezustand (geöffnet oder geschlossen) der ersten Informationstafel immer sichergestellt werden, dass das erste Rundinstrument zur Anzeige eines Drehzahlmessers oder eines Tachometers und die Fahrzeuganzeige zur Anzeige mindestens eines Zustands eines Fahrerassistenzsystems und/oder einer Fahrzeugumgebung stets sichtbar bleiben. Insbesondere kann hierbei die zentrale Fahrzeuganzeige so eingerichtet sein, dass dort für den Fahrbetrieb besonders wichtige Informationen bzw. Daten eines Fahrerassistenzsystems und/oder einer Fahrzeugumgebung angezeigt werden, die dann für den Fahrer stets sichtbar sind.

Gemäß einer besonders bevorzugten Ausführungsform ist die Anzeigefläche durch die Steuervorrichtung derart ansteuerbar, dass die erste Informationstafel durch eine vorhangartige oder schubladenartige Aufziehbewegung in Richtung der Fahrzeuganzeige vergrößert wird. Beispielsweise kann die erste Informationstafel durch eine seitliche Aufziehbewegung in Richtung der Fahrzeuganzeige vergrößert werden, bei der sich nur die horizontale Länge der ersten Informationstafel ändert und die Höhe der ersten Informationstafel unverändert bleibt.

Gemäß diesem Aspekt werden dem Fahrer zu jeder Zeit Informationen zusammenfassend angezeigt, die im entsprechenden Moment relevant sind, vorstehend als zusammenfassende Inhaltsübersicht beschrieben, die im geschlossenen Zustand der Informationstafel angezeigt wird. Durch die vorhangartige oder schubladenartige Aufziehbewegung kann der Fahrer zusätzlich tiefergehende Informationen (auch individualisierbar) oder Einstellungen anhand von Bedienelementen auf der Bedieneinrichtung abrufen. Um die Ablenkung des Fahrers auf ein Minimum zu beschränken, greift die vorhangartige oder schubladenartige Aufziehbewegung auf eine Metapher zurück, die dem Benutzer aus dem Alltag bekannt ist. So kann der Fahrer, grafisch oder durch Animationen unterstützt, die gewünschten Informationen "schubladenartig" hervorziehen bzw. wieder schließen. Innerhalb dieser Informationstafeln trifft er daraufhin auf gewohnte, klar strukturierte Menüstrukturen bzw. gewünschte Anzeigen/Einstellungsmöglichkeiten. Zudem kann der Fahrer sich individualisierte Informationen parallel zu den wichtigsten fixen Informationen anzeigen lassen, ohne dass diese überblendet werden müssen. Das Erzeugen der animierten Öffnungsbewegung und/oder einer entsprechenden animierten Schließbewegung beim Übergang vom geschlossenen zum geöffneten Zustand bietet dem Fahrer ferner ein intuitiv verständliches wegweisendes Element (im Gegensatz zu unruhigen Effekten).

Gemäß einer weiteren Ausführungsform ist die Anzeigefläche durch die Steuervorrichtung derart ansteuerbar, dass auf einem ersten seitlichen Endbereich der Anzeigefläche das erste Rundinstrument und auf einem hierzu gegenüberliegenden zweiten seitlichen Endbereich ein zweites Rundinstrument, insbesondere zur Anzeige eines Drehzahlmessers oder eines Tachometers, angezeigt wird und dass zwischen dem zweiten Rundinstrument und der Fahrzeuganzeige eine zweite Informationstafel, nachfolgend auch als zweites Vorhangfenster bezeichnet, angezeigt wird. Analog zur ersten Informationstafel kann die zweite Informationstafel wahlweise in einem geöffneten Zustand, in welchem die zweite Informationstafel Detailinformationen anzeigt, und in einem geschlossenen Zustand, in welchem die zweite Informationstafel eine zusammenfassende Inhaltsübersicht (Vorschauinformation) anzeigt, die auf in dem geöffneten Zustand anzeigbare Detailinformationen hinweist, anzeigbar sein. Ferner ist ebenfalls mittels einer Betätigung der Eingabeeinrichtung ein Wechsel vom geschlossenen zum geöffneten Zustand der zweiten Informationstafel auslösbar und vorzugsweise umgekehrt. Beim Wechsel wird vorzugsweise eine animierte Öffnungsbewegung erzeugt, bei der die zweite Informationstafel durch eine Aufziehbewegung der zweiten Informationstafel in Richtung der Fahrzeuganzeige vergrößert wird und dabei die Fahrzeuganzeige auf der Anzeigefläche verschiebt, derart, dass diese weiterhin angezeigt wird. Ein Nutzer kann mittels der Eingabeeinrichtung wahlweise einen Wechsel (W) vom geöffneten zum geschlossenen Zustand und vice versa der ersten Informationstafel und/oder der zweiten Informationstafel steuern.

Die weitere Ausführungsform bietet den Vorzug, dass unabhängig vom Anzeigezustand (geöffnet oder geschlossen) sowohl der ersten als auch der zweiten Informationstafel stets die beiden Rundinstrumente und die zentrale Fahrzeuganzeige auf der Anzeigefläche immer sichtbar sind und nicht von der vorhangartigen Öffnungsbewegung einer der Informationsfenstern überblendet werden.

Das erste Rundinstrument ist vorzugsweise ein Tachometer, während das zweite Rundinstrument vorzugsweise ein Drehzahlmesser ist. Das erste und/oder zweite Rundinstrument ist vorzugsweise als digitales (virtuelles) Rundinstrument ausgeführt, so dass die gesamte Anzeigefläche als Bildschirm (Display) eines frei programmierbaren Kombiinstruments ausgeführt ist.

Bei einer vorteilhaften Variante dieser Ausgestaltungsform ist die Anzeigefläche durch die Steuervorrichtung derart ansteuerbar, dass beim Wechsel vom geschlossenen zum geöffneten Zustand der ersten Informationstafel die Fahrzeuganzeige über einen der zweiten Informationstafel zugeordneten Bereich der Anzeigefläche geschoben wird, so dass im geöffneten Zustand der ersten Informationstafel die zweite Informationstafel in ihrem geschlossenen Zustand von der Fahrzeuganzeige überdeckt wird. Entsprechend kann beim Wechsel vom geschlossenen zum geöffneten Zustand der zweiten Informationstafel die Fahrzeuganzeige über einen der ersten Informationstafel zugeordneten Bereich der Anzeigefläche geschoben werden, so dass im geöffneten Zustand der zweiten Informationstafel die erste Informationstafel in ihrem geschlossenen Zustand von der Fahrzeuganzeige überdeckt wird. Beispielsweise kann die zentrale Fahrzeuganzeige bei geöffneter (fokussierter) rechter Informationstafel nach links verschoben werden und bei geöffneter (fokussierter) linker Informationstafel nach rechts.

Gemäß dieser Variante kann sich der Fahrer über eine entsprechende Eingabe mittels der Bedieneinrichtung bei Bedarf tiefergehende Informationen oder Einstellungen durch Öffnen einer der beiden Informationstafeln anzeigen lassen, wobei die andere, zu diesem Zeitpunkt geschlossene Informationstafel von der zentralen Fahrzeuganzeige, die durch die Aufziehbewegung über die andere Informationstafel geschoben wird, überblendet bzw. verdeckt wird. Die Rundinstrumente und die zentrale Fahrzeuganzeige bleiben jedoch weiterhin sichtbar.

Gemäß einem weiteren Aspekt wird das erste und/oder das zweite Rundinstrument während des Wechsels vom geschlossenen zum geöffneten Zustand der ersten und/oder zweiten Informationstafel nicht verschoben, sondern verbleibt an einer vorbestimmten Stelle auf der Anzeigefläche und ist unabhängig vom Anzeigezustand der ersten und/oder zweiten Informationstafel stets sichtbar.

Gemäß einer weiteren besonders bevorzugten Variante dieser Ausführungsform ist die Anzeigefläche durch die Steuervorrichtung derart ansteuerbar, dass die erste Informationstafel im geöffneten Zustand zumindest eine der folgenden Informationen anzeigt: Daten betreffend mindestens eine Fahrzeugprüffunktion, wie beispielsweise Zustandsinformationen betreffend einen Bremsbelag, eine Fahrzeugbatterie, Service-Intervalle und/oder Daten betreffend Fahrzeugeinstellungen, wie beispielsweise Lichteinstellungen, Warntoneinstellungen, Spracheinstellungen.

Gemäß dieser Variante ist die Anzeigefläche durch die Steuervorrichtung derart ansteuerbar, dass die zweite Informationstafel im geöffneten Zustand zumindest eine der folgenden Informationen anzeigt: Angaben und/oder Daten betreffend ein Telefon, ein Radio und/oder ein Mediengerät. Gemäß dieser Variante sind die über die jeweiligen Informationstafeln bzw. Vorhangfenster bereitgestellten Informationen thematisch getrennt.

Gemäß einer weiteren Ausführungsform kann die Anzeigefläche durch die Steuervorrichtung derart ansteuerbar sein, dass die erste Informationstafel im geöffneten Zustand zumindest eines der folgenden Elemente anzeigt: ein Auswahlmenü, Listenelemente und/oder eine Auswahlliste. Ferner können mittels der Eingabeeinrichtung Informations- und/oder Auswahlelemente, die im geöffneten Zustand der ersten Informationstafel innerhalb dieser angezeigt werden, auswählbar sein.

Dies bietet den Vorzug, dass das Auffinden weiterer, detaillierter Einstellungen durch die klare thematische Unterteilung und die strukturierte Darstellung der umfangreichen Menüstruktur unkompliziert und mit geringer Ablenkung ermöglicht wird.

Unter dem Betriff "Informationstafel" wird ein vorbestimmter, in seiner Größe jedoch variabler Bereich auf der Anzeigefläche verstanden, der zur Anzeige vorbestimmter Informationen vorgesehen ist. Die Informationstafel kann als Informationsfenster oder allgemein als Anzeigebereich ausgeführt sein.

Gemäß einem weiteren Aspekt ist die Fahrzeuganzeige im geschlossenen Zustand der ersten Informationstafel mittig auf der Anzeigefläche angeordnet. Dies ist besonders vorteilhaft bei zwei Informationstafeln, wie vorstehend beschrieben, da dann bei Verschieben der Fahrzeuganzeige nach links oder rechts, je nachdem welche Informationstafel geöffnet wird, ein großer Darstellungsbereich auf der Anzeigefläche zur Darstellung einer Informationstafel im geöffneten Zustand bereitgestellt werden kann.

Die Eingabeeinrichtung kann mindestens ein auf einem Multifunktionslenkrad angeordnetes Bedienelement aufweisen. Ferner kann das mindestens eine Bedienelement eine Walze, Rolle und/oder mindestens eine Drucktaste aufweisen.

Die vorstehend genannten Aspekte betreffend die Ausführungsvarianten der ersten Informationstafel gelten analog auch für die zweite Informationstafel. So kann die Anzeigefläche durch die Steuervorrichtung derart ansteuerbar sein, dass die zweite Informationstafel durch eine vorhangartige oder schubladenartige Aufziehbewegung in Richtung der Fahrzeuganzeige vergrößert wird und/oder durch eine seitliche Aufziehbewegung in Richtung der Fahrzeuganzeige vergrößert wird, bei der sich nur die horizontale Länge der zweiten Informationstafel ändert und die Höhe der Informationstafel unverändert bleibt. Ferner kann die Fahrzeuganzeige im geschlossenen Zustand der zweiten Informationstafel mittig auf der Anzeigefläche angeordnet sein. Ferner können im geöffneten Zustand der zweiten Informationstafel innerhalb der zweiten Informationstafel Informations- und/oder Auswahlelemente angezeigt werden, die mittels der Eingabeeinrichtung auswählbar sind. Ferner kann die zweite Informationstafel im geöffneten Zustand zumindest eines der folgenden Elemente anzeigen: ein Auswahlmenü, Listenelemente und/oder eine Auswahlliste.

Die Erfindung betrifft ferner ein Kraftfahrzeug, insbesondere ein Nutzfahrzeug, umfassend ein Bediensystem wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Bediensystem gemäß einer beispielhaften Ausführungsform der vorliegenden Erfindung mit einer ersten Informationstafel im geöffneten und geschlossenen Zustand;
- Figur 2: ein Bediensystem gemäß der beispielhaften Ausführungsform der vorliegenden Erfindung mit einer ersten Informationstafel im geöffneten Zustand;
- Figur 3: ein Bediensystem gemäß der beispielhaften Ausführungsform der vorliegenden Erfindung mit einer zweiten Informationstafel im geöffneten Zustand; und
- Figur 4: eine Illustration der vorhangartigen Aufziehbewegung einer Informationstafel gemäß der beispielhaften Ausführungsform.

Gleiche oder funktional äquivalente Elemente sind in allen Figuren mit denselben Bezugszeichen bezeichnet und werden zum Teil nicht gesondert beschrieben.

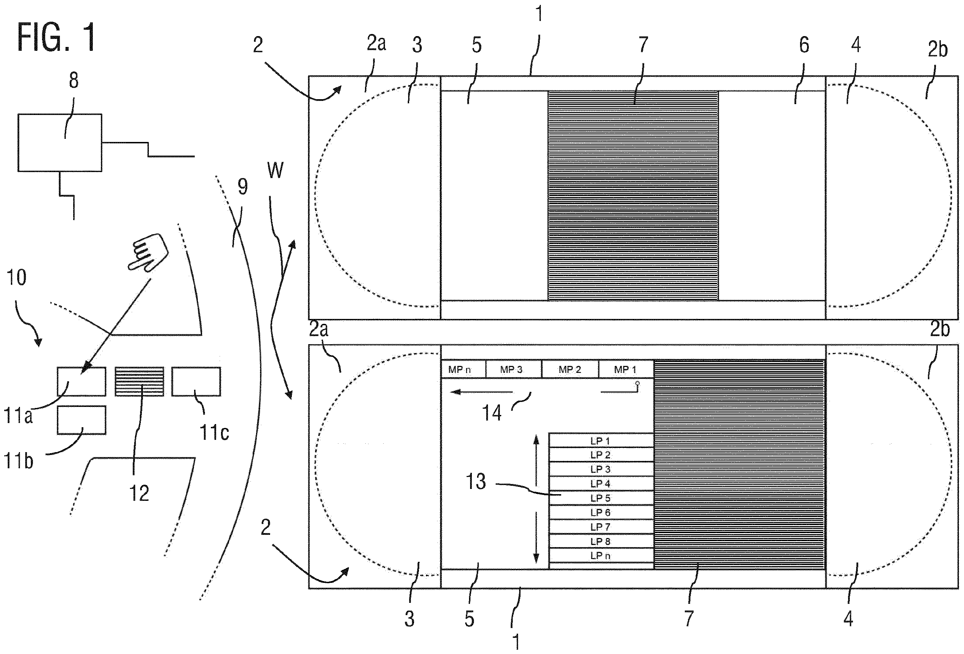

Figur 1 illustriert ein Bediensystem für ein Fahrzeug, insbesondere für ein Nutzfahrzeug gemäß einer beispielhaften Ausführungsform der vorliegenden Erfindung. Hierzu zeigt Figur 1 eine Teilansicht eines Multifunktionslenkrads 9 eines Kraftfahrzeugs und eine Anzeigevorrichtung 1 mit einer Anzeigefläche 2. Die Anzeigevorrichtung 1 bzw. die Anzeigefläche 2 ist zweimal dargestellt, um unterschiedliche Anzeigezustände der Anzeigefläche 2 zu illustrieren.

Das Bediensystem dient zur Auswahl und Ausgabe von bestimmten Fahrzeugfunktionalitäten und/oder Informationen. Es umfasst die Anzeigevorrichtung 1 mit der Anzeigefläche 2, eine auf dem Multifunktionselenkrad 9 vorgesehene Eingabeeinrichtung 10 zur Markierung und/oder Auswahl eines auf der Anzeigefläche 2 angezeigten Elements durch einen Nutzer und eine lediglich stark schematisiert dargestellte Steuervorrichtung 8, die an die Anzeigevorrichtung 1 und die Eingabeeinrichtung 10 angekoppelt ist.

Die Eingabeeinrichtung 10 weist lediglich beispielhaft als Bedienelement eine Walze 12 und drei Drucktasten 11a, 11b, 11c auf, deren Funktion nachfolgend noch beschrieben wird. Die Drucktaste 11a kann z. B. mit "links", die Drucktaste 11c mit "rechts" und die Drucktaste 11b mit "zurück" beschriftet sein.

Mit der Steuervorrichtung ist eine wiedergebende Anzeige auf der Anzeigefläche 2 steuerbar. Dadurch lassen sich beispielsweise von der Eingabeeinrichtung 10 kommende Befehle durch die Steuervorrichtung auf der Anzeigefläche visualisieren.

Die gesamte Anzeigefläche 2 ist als Bildschirm (z. B. ein TFT-Display) eines frei programmierbaren Kombiinstruments ausgeführt. Anstatt herkömmlicher analoger Tachometer und Drehzahlmesser wird der Bildschirm 2 dazu verwendet, Tachometer und Drehzahlmesser als digitale (virtuelle) Rundinstrumente 3 und 4 darzustellen. Vorliegend ist der Tachometer als Halbrundinstrument 3 an einem in Figur 1 dargestellten linksseitigen Endbereich 2a und der Drehzahlmesser 4 an einem in Figur 1 dargestellten rechtsseitigen Endbereich 2b der Anzeigefläche 2 dargestellt. Zwischen den beiden digitalen Rundinstrumenten 3, 4 werden eine erste Informationstafel 5 und eine zweite Informationstafel 6 angezeigt.

Die erste Informationstafel 5 kann wahlweise in einem geöffneten Zustand und in einem geschlossenen Zustand angezeigt werden. Ein Wechsel von einem geöffneten zu einem geschlossenen Zustand und umgekehrt kann über die Bedieneinrichtung 10 von einem Nutzer gesteuert werden. Gleiches gilt für die zweite Informationstafel 6.

Die in Figur 1 oben dargestellte Anzeigefläche 2 zeigt sowohl die erste Informationstafel 5 als auch die zweite Informationstafel 6 in einem geschlossenen Zustand. Zwischen den beiden Informationstafeln 5, 6 ist eine zentrale Fahrzeuganzeige 7 dargestellt.

Die in Figur 1 unten dargestellte Anzeigefläche 2 zeigt die erste Informationstafel 5 dagegen im geöffneten bzw. aufgezogenen Zustand, in dem die zentrale Fahrzeuganzeige 7 nach rechts über die zweite Informationstafel 6 geschoben ist, so dass diese in diesem Anzeigezustand nicht sichtbar ist.

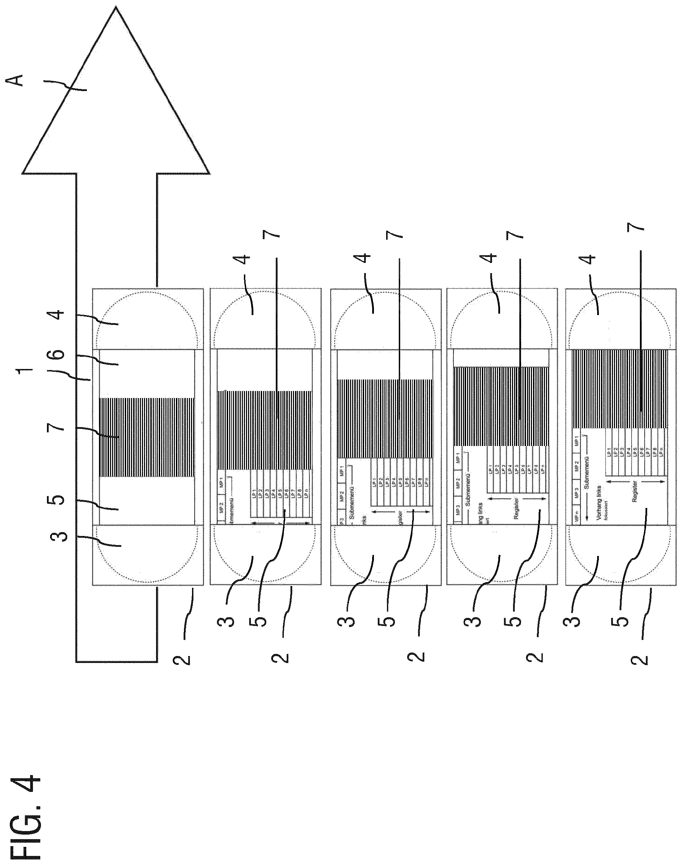

Vorstehend wurde bereits erwähnt, dass mittels einer Betätigung der Eingabeeinrichtung 10 ein Wechsel vom geschlossenen zum geöffneten Zustand und umgekehrt der Informationstafeln 5, 6 steuerbar ist. Beispielsweise kann durch Drücken der Taste "links" 11a die linke Informationstafel 5 geöffnet werden. Hierbei wird beim Wechsel eine animierte Öffnungsbewegung A erzeugt, bei der die erste Informationstafel durch eine Aufziehbewegung der ersten Informationstafel in Richtung der Fahrzeuganzeige 7 vergrößert wird und dabei die Fahrzeuganzeige 7 auf der Anzeigefläche 2 verschiebt, derart, dass diese weiterhin angezeigt wird. Diese animierte Öffnungsbewegung A ist in Figur 4 schematisch illustriert. Figur 4 zeigt beispielhaft fünf verschiedene Anzeigezustände der Anzeigefläche 2 während der Öffnungsbewegung der ersten Informationstafel 5.

Die in Figur 4 oben dargestellten Anzeigefläche 2 zeigt die beiden Informationstafeln 5 und 6 im geschlossenen Zustand. Die darunter angeordneten Anzeigeflächen 2 zeigen sukzessive Anzeigezustände während der animierten Öffnungsbewegung der ersten Informationstafel 5. Es ist erkennbar, dass die erste Informationstafel 5 durch eine vorhangartige oder schubladenartige Aufziehbewegung in Richtung der Fahrzeuganzeige 7 vergrößert wird und dabei die Fahrzeuganzeige 7 auf der Anzeigefläche 2 nach rechts verschiebt, derart, dass diese über die rechte Informationstafel 6 geschoben wird und diese überdeckt. Dadurch bleibt die Fahrzeuganzeige 7 auch im geöffneten Zustand der ersten Informationstafel 5 sichtbar. Durch eine animierte Bewegung der Informationstafel (des Vorhangfensters) in die entsprechende Richtung kann der gewohnte Eindruck des "Aufziehens" eines Vorhangelements für den Nutzer unterstützt werden.

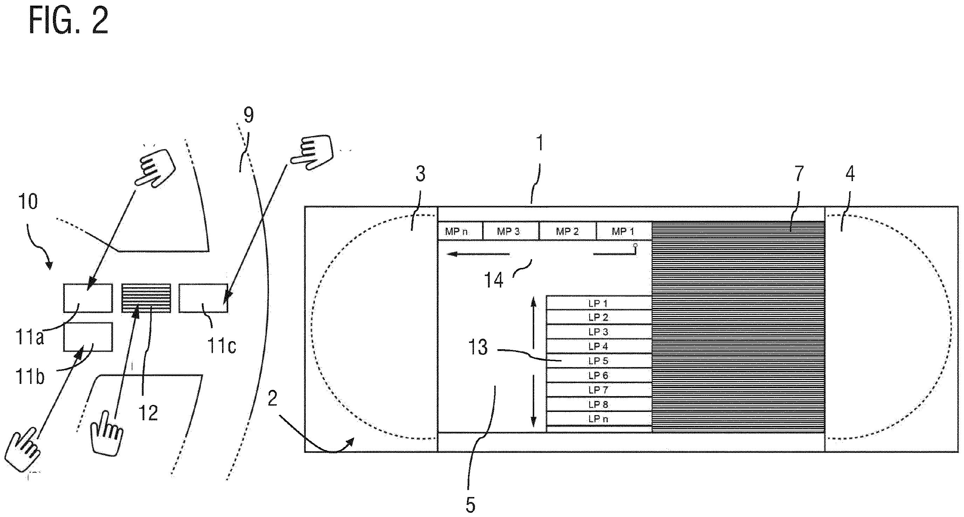

Im geschlossenen Zustand zeigen die Informationstafeln 5 und 6 nur eine zusammenfassende Inhaltsübersicht und/oder eine Vorschauinformation an (nicht dargestellt). Erst im geöffneten Zustand der Informationstafeln 5 und 6 erhält der Nutzer Zugriff auf Detailinformationen. Dies ist in Figuren 1, 2 und 4 beispielhaft für die erste Informationstafel 5 gezeigt. Im geöffneten Zustand beinhaltet die erste Informationstafel 5 eine Navigationsleiste (ein Submenü) 14 über dem Kontextbereich. Darunter erscheint in der Informationstafel 5 ein Register 13 mit Listeneinträgen. Mit der Walze 12 kann der Nutzer im Register nach oben und nach unten navigieren. Manche Listeneinträge sind mit Detailansichten verknüpft, andere mit weiteren Subregistern. Mit der Taste "links" 11a kann der Fahrer im Submenü im Beispiel ausschließlich nach links navigieren (Endlosmenü). Die Taste "zurück" 11b lässt den Fahrer im jeweiligen Submenü eine Hierarchiestufe zurückspringen. Die geöffnete Informationstafel 5 kann z. B. durch Drücken der Taste "rechts" 11c geschlossen werden, um wieder zur Hauptanzeige, wie durch die Anzeigefläche 2 oben in Figur 1 dargestellt, zu gelangen. Ein erneutes Drücken der Taste "rechts" 11c öffnet dann die rechte Informationstafel 6.

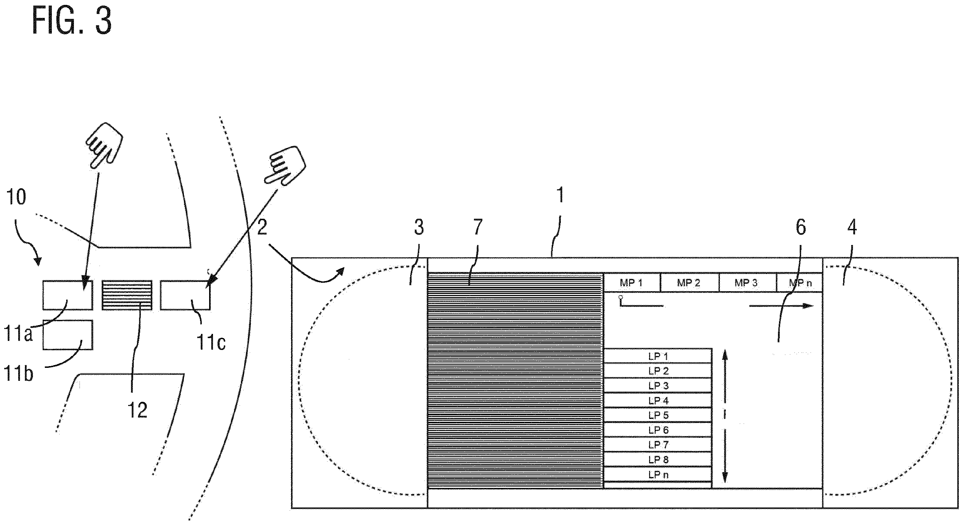

Auch die rechte Informationstafel 6 kann in analoger Weise vorhangartig ausgezogen werden. Die rechte Informationstafel 6 (das rechte Vorhangfenster) kann z. B. durch (erstmaliges oder ggf. erneutes) Drücken der Taste "rechts" 11c geöffnet werden. Die Bedienung des Submenüs und des Registers erfolgt identisch zur linken Informationstafel 5, was in Figur 3 illustriert ist. Zum Schließen der rechten Informationstafel 6 kann über ein Drücken der Taste "links" 11a erfolgen.

Mittels der Bedienelemente der Eingabeeinrichtung 10 wird ein einfaches Öffnen und Schließen der Informationstafeln 5, 6 und ein Navigieren innerhalb der geöffneten Informationstafeln 5, 6 ermöglicht. Lediglich beispielhaft kann die Navigation wie folgt zusammengefasst werden: Über die Tasten "links" 11a und "rechts" 11c können die Informationstafeln 5, 6 geöffnet und geschlossen werden und in dem horizontalen Menü 14 navigiert werden. Über die Walze 12 mit Bestätigungsfunktion kann hoch und runter im vertikalen Menü 13 navigiert werden und ein Auswahl bestätigt werden. Über die Taste "zurück" 11b kann auf eine Hierarchieebene zurück gelangt werden bzw. mit einem langen Gedrückt halten ("Long press") auf die oberste Ebene des aktuellen Submenüs in der Informationstafel gesprungen werden. Es wird nochmals betont, dass das beschriebene Bedienkonzept lediglich bespielhaft ist.

Die zentrale Fahrzeuganzeige 7 zeigt im Betrieb des Fahrzeugs den Zustand der Fahrassistenzsysteme und der Umgebung an, beispielsweise einen Eingriff des Spurhalteassistenten, das Eco Level, oder die gewählte Stufe der Abstandsregelung. Aus Sicherheitsgründen muss diese zentrale Fahrzeuganzeige 7 immer sichtbar sein und findet daher in der zentralen Fahrzeuganzeige Platz. Tiefergehende Informationen zum Fahrzeug, wie Daten zum Fahrzeugcheck (Bremsbelag, Batterie, Service-Intervalle u. Ä.), vorangegangene Meldungen, z. B. Fehlermeldungen, Fahrdaten und Einstellungen (Sprache, Lichteinstellungen, Warntöne u. Ä.) können über das linke Vorhangfenster 5 bei Bedarf abgerufen werden. Im rechten Vorhangfenster 6 werden Daten zu Telefon, Mediengeräten und Radio bereitgestellt. Die beiden Vorhangfenster 5, 6 sind also thematisch getrennt.

Auf der Fahrzeuganzeige 7 werden immer die aktuell relevanten Informationen, vorzugsweise die für die Fahrsicherheit relevanten Informationen, angezeigt. Das Auffinden weiterer, detaillierter Einstellungen ist durch die klare thematische Unterteilung und die strukturierte Darstellung der umfangreichen Menüstruktur der Informationstafeln 5, 6 unkompliziert und mit geringer Ablenkung möglich. Ferner kann eine Füllstandsanzeige, z. B. in Form einer Balkenanzeige am unteren Rand des Displays, z. B. Kraftstoff- und AdBlue-Vorrat, angezeigt werden.

Zusammengefasst können bei Bedarf die Vorhangfenster 5, 6 durch einen Nutzer auf intuitive Weise vorhangartig aufgezogen werden, um Zugriff auf weitere Detailinformationen und Auswahloptionen zu erhalten. Dabei wird der von einer Informationstafel beanspruchte Darstellungsbereich auf der Anzeigefläche vergrößert, wobei jedoch sichergestellt ist, dass für die Fahrsicherheit wichtige Informationen weiterhin sichtbar bleiben, da die zentrale Fahrzeuganzeige 7 unabhängig vom Anzeigezustand der Informationstafeln 5 und 6 stets sichtbar bleibt und nur temporär zur Seite verschoben wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Anzeigevorrichtung
- 2: Anzeigefläche
- 3: Erstes Rundinstrument
- 4: Zweites Rundinstrument
- 5: Erste Informationstafel
- 6: Zweite Informationstafel
- 7: Fahrzeuganzeige
- 8: Steuervorrichtung
- 9: Multifunktionslenkrad
- 10: Eingabeeinrichtung
- 11a, 11b, 11c: Drucktasten
- 12: Walze
- 13: Auswahlliste
- 14: Untermenü
- A: Animationsbewegung

## Patentansprüche

1. Bediensystem für ein Fahrzeug zur Auswahl und Ausgabe von bestimmten Fahrzeugfunktionalitäten und/oder Informationen, umfassend
eine Anzeigevorrichtung (1) mit einer Anzeigefläche (2);
eine Eingabeeinrichtung (10) zur Markierung und/oder Auswahl eines auf der Anzeigefläche angezeigten Elements durch einen Nutzer;
eine Steuervorrichtung (8), die an die Anzeigevorrichtung (1) und die Eingabeeinrichtung (10) angekoppelt ist und mit der eine wiedergebende Anzeige auf der Anzeigefläche (2) steuerbar ist, wobei die Anzeigefläche (2) durch die Steuervorrichtung (8) derart ansteuerbar ist, dass auf der Anzeigefläche (2) ein erstes Rundinstrument (3) zur Anzeige eines Drehzahlmessers oder eines Tachometers, eine Fahrzeuganzeige (7) zur Anzeige mindestens eines Zustands eines Fahrerassistenzsystems und/oder einer Fahrzeugumgebung und eine zwischen dem ersten Rundinstrument (3) und der Fahrzeuganzeige (7) angeordnete erste Informationstafel (5) angezeigt werden,
wobei die erste Informationstafel (5) wahlweise in einem geöffneten Zustand, in welchem die erste Informationstafel (5) Detailinformationen (13, 14) anzeigt, und in einem geschlossenen Zustand, in welchem die erste Informationstafel (5) eine zusammenfassende Inhaltsübersicht anzeigt, die auf in dem geöffneten Zustand anzeigbare Detailinformationen (13, 14) hinweist, anzeigbar ist;
wobei mittels einer Betätigung der Eingabeeinrichtung (10) ein Wechsel (W) vom geschlossenen zum geöffneten Zustand auslösbar ist, wobei beim Wechsel (W) eine animierte Öffnungsbewegung (A) erzeugt wird, bei der die erste Informationstafel durch eine Aufziehbewegung in Richtung der Fahrzeuganzeige (7) vergrößert wird und dabei die Fahrzeuganzeige (7) auf der Anzeigefläche (2) verschiebt, derart, dass diese weiterhin angezeigt wird.

2. Bediensystem nach Anspruch 1, wobei die Anzeigefläche (2) durch die Steuervorrichtung (8) derart ansteuerbar ist,
a) dass die erste Informationstafel (5) durch eine vorhangartige oder schubladenartige Aufziehbewegung in Richtung der Fahrzeuganzeige (7) vergrößert wird; und/oder
b) dass die erste Informationstafel (5) durch eine seitliche Aufziehbewegung in Richtung der Fahrzeuganzeige (7) vergrößert wird, bei der sich nur die horizontale Länge der ersten Informationstafel (5) ändert und die Höhe der ersten Informationstafel (5) unverändert bleibt.

3. Bediensystem nach Anspruch 1 oder 2, wobei die Anzeigefläche (2) durch die Steuervorrichtung (8) derart ansteuerbar ist,
a) dass auf einem ersten seitlichen Endbereich (2a) der Anzeigefläche (2) das erste Rundinstrument (3) und auf einem hierzu gegenüberliegenden zweiten seitlichen Endbereich (2b) ein zweites Rundinstrument (4) angezeigt wird; und
b) dass zwischen dem zweiten Rundinstrument (4) und der Fahrzeuganzeige (7) eine zweite Informationstafel (6) angezeigt wird,
wobei die zweite Informationstafel (4) wahlweise in einem geöffneten Zustand, in welchem die zweite Informationstafel Detailinformationen anzeigt, und in einem geschlossenen Zustand, in welchem die zweite Informationstafel eine zusammenfassende Inhaltsübersicht anzeigt, die auf in dem geöffneten Zustand anzeigbare Detailinformationen hinweist, anzeigbar ist;
wobei mittels einer Betätigung der Eingabeeinrichtung ein Wechsel (W) vom geschlossenen zum geöffneten Zustand der zweiten Informationstafel (6) auslösbar ist, wobei beim Wechsel (W) eine animierte Öffnungsbewegung (A) erzeugt wird, bei der die zweite Informationstafel (6) durch eine Aufziehbewegung der zweiten Informationstafel (6) in Richtung der Fahrzeuganzeige (7) vergrößert wird und dabei die Fahrzeuganzeige (7) auf der Anzeigefläche (2) verschiebt, derart, dass diese weiterhin angezeigt wird.

4. Bediensystem nach Anspruch 3, wobei die Anzeigefläche (2) durch die Steuervorrichtung (8) derart ansteuerbar ist,
a) dass beim Wechsel vom geschlossenen zum geöffneten Zustand der ersten Informationstafel (5) die Fahrzeuganzeige (7) über einen der zweiten Informationstafel (6) zugeordneten Bereich der Anzeigefläche (2) geschoben wird, so dass im geöffneten Zustand der ersten Informationstafel (5) die zweite Informationstafel (6) in ihrem geschlossenen Zustand von der Fahrzeuganzeige (7) überdeckt wird; und/oder
b) dass beim Wechsel vom geschlossenen zum geöffneten Zustand der zweiten Informationstafel (6) die Fahrzeuganzeige (7) über einen der ersten Informationstafel (5) zugeordneten Bereich der Anzeigefläche (2) geschoben wird, so dass im geöffneten Zustand der zweiten Informationstafel (6) die erste Informationstafel (5) in ihrem geschlossenen Zustand von der Fahrzeuganzeige (7) überdeckt wird.

5. Bediensystem nach einem der vorhergehenden Ansprüche, wobei die Anzeigefläche (2) ein Bildschirm ist und das erste und/oder zweite Rundinstrument (3, 4) digitale Rundinstrumente sind.

6. Bediensystem nach einem der vorhergehenden Ansprüche, wobei die Fahrzeuganzeige (2) im geschlossenen Zustand der ersten Informationstafel (5) mittig auf der Anzeigefläche (2) angeordnet ist.

7. Bediensystem nach einem der vorhergehenden Ansprüche, wobei die Eingabeeinrichtung (10) mindestens ein auf einem Multifunktionslenkrad (9) angeordnetes Bedienelement aufweist, wobei das mindestens eine Bedienelement eine Walze (12) und mindestens eine Drucktaste (11a, 11b, 11c) aufweist.

8. Bediensystem nach einem der vorhergehenden Ansprüche, wobei die Anzeigefläche (2) durch die Steuervorrichtung (8) derart ansteuerbar ist, dass die erste Informationstafel (5) im geöffneten Zustand zumindest eines der folgenden Elemente anzeigt: ein Auswahlmenü (14), Listenelemente und/oder eine Auswahlliste (13).

9. Bediensystem nach einem der vorhergehenden Ansprüche, wobei mittels der Eingabeeinrichtung (10) Informations- und/oder Auswahlelemente, die im geöffneten Zustand der ersten Informationstafel (5) innerhalb dieser angezeigt werden, auswählbar sind.

10. Bediensystem nach einem der Ansprüche 2 bis 9, wobei die Anzeigefläche durch die Steuervorrichtung derart ansteuerbar ist,
a) dass die erste Informationstafel (5) im geöffneten Zustand zumindest eine der folgenden Informationen anzeigt: Daten betreffend mindestens eine Fahrzeugprüffunktion, wie beispielsweise Zustandsinformationen betreffend einen Bremsbelag, eine Fahrzeugbatterie, Service-Intervalle und/oder Daten betreffend Fahrzeugeinstellungen, wie beispielsweise Lichteinstellungen, Warntoneinstellungen, Spracheinstellungen; und/oder
b) dass die zweite Informationstafel (6) im geöffneten Zustand zumindest eine der folgenden Informationen anzeigt: Angaben und/oder Daten betreffend ein Telefon, ein Radio, ein Mediengerät.

11. Bediensystem nach einem der Ansprüche 2 bis 10, wobei die Anzeigefläche durch die Steuervorrichtung derart ansteuerbar ist,
a) dass die zweite Informationstafel (6) durch eine vorhangartige oder schubladenartige Aufziehbewegung in Richtung der Fahrzeuganzeige (7) vergrößert wird; und/oder
b) dass die zweite Informationstafel (6) durch eine seitliche Aufziehbewegung in Richtung der Fahrzeuganzeige (7) vergrößert wird, bei der sich nur die horizontale Länge der zweiten Informationstafel ändert und die Höhe der Informationstafel unverändert bleibt; und/oder
c) dass die Fahrzeuganzeige (7) im geschlossenen Zustand der zweiten Informationstafel (6) mittig auf der Anzeigefläche (2) angeordnet ist; und/oder
d) dass im geöffneten Zustand der zweiten Informationstafel (6) Informations- und/oder Auswahlelemente angezeigt werden, die mittels der Eingabeeinrichtung (10) auswählbar sind; und/oder
e) dass die zweite Informationstafel (6) im geöffneten Zustand zumindest eines der folgenden Elemente anzeigt: ein Auswahlmenü, Listenelemente und/oder eine Auswahlliste.

12. Kraftfahrzeug, insbesondere Nutzfahrzeug, umfassend ein Bediensystem nach einem der vorherigen Ansprüche.

## Claims

1. An operating system for a vehicle for selecting and outputting specific vehicle functionalities and/or information, comprising
a display apparatus (1) having a display area (2);
an input device (10) for a user to mark and/or select an element displayed on the display area;
a control apparatus (8) that is coupled to the display apparatus (1) and the input device (10) and can be used to control a representative display on the display area (2), wherein the display area (2) is actuatable by the control apparatus (8) in such a way that the display area (2) displays a first round instrument (3) for displaying a revolution counter or a tachometer, a vehicle display (7) for displaying at least one state of a driver assistance system and/or vehicle surroundings and a first information panel (5) arranged between the first round instrument (3) and the vehicle display (7),
wherein the first information panel (5) is displayable either in an open state, in which the first information panel (5) displays detailed information (13, 14), or in a closed state, in which the first information panel (5) displays a summarizing content overview that refers to detailed information (13, 14) displayable in the open state;
wherein operating the input device (10) can be used to trigger a change (W) from the closed to the open state, wherein the change (W) results in an animated opening movement (A) being produced that involves the first information panel being enlarged by a drawing-open movement in the direction of the vehicle display (7) and shifting the vehicle display (7) on the display area (2) in such a way that the latter continues to be displayed.

2. The operating system according to Claim 1, wherein the display area (2) is actuatable by the control apparatus (8) in such a way
a) that the first information panel (5) is enlarged by a curtain-like or drawer-like drawing-open movement in the direction of the vehicle display (7); and/or
b) that the first information panel (5) is enlarged by a lateral drawing-open movement in the direction of the vehicle display (7) that involves only the horizontal length of the first information panel (5) changing and the height of the first information panel (5) remaining unchanged.

3. The operating system according to Claim 1 or 2, wherein the display area (2) is actuatable by the control apparatus (8) in such a way
a) that a first lateral end region (2a) of the display area (2) displays the first round instrument (3) and a second lateral end region (2b), opposite the latter, displays a second round instrument (4); and
b) that a second information panel (6) is displayed between the second round instrument (4) and the vehicle display (7),
wherein the second information panel (4) is displayable either in an open state, in which the second information panel displays detailed information, or in a closed state, in which the second information panel displays a summarizing content overview that refers to detailed information displayable in the open state; wherein operating the input device can be used to trigger a change (W) from the closed to the open state of the second information panel (6), wherein the change (W) results in an animated opening movement (A) being produced that involves the second information panel (6) being enlarged by a drawing-open movement of the second information panel (6) in the direction of the vehicle display (7) and shifting the vehicle display (7) on the display area (2) in such a way that the latter continues to be displayed.

4. The operating system according to Claim 3, wherein the display area (2) is actuatable by the control apparatus (8) in such a way
a) that the change from the closed to the open state of the first information panel (5) results in the vehicle display (7) being pushed over a region of the display area (2) that is associated with the second information panel (6), so that in the opened state of the first information panel (5) the second information panel (6) in its closed state is covered by the vehicle display (7); and/or
b) that the change from the closed to the open state of the second information panel (6) results in the vehicle display (7) being pushed over a region of the display area (2) that is associated with the first information panel (5), so that in the opened state of the second information panel (6) the first information panel (5) in its closed state is covered by the vehicle display (7).

5. The operating system according to one of the preceding claims, wherein the display area (2) is a screen and the first and/or second round instrument (3, 4) are digital round instruments.

6. The operating system according to one of the preceding claims, wherein the vehicle display (2) is arranged centrally on the display area (2) in the closed state of the first information panel (5).

7. The operating system according to one of the preceding claims, wherein the input device (10) has at least one operator control element arranged on a multifunction steering wheel (9), wherein the at least one operator control element has a roller (12) and at least one pushbutton (11a, 11b, 11c).

8. The operating system according to one of the preceding claims, wherein the display area (2) is actuatable by the control apparatus (8) in such a way that the first information panel (5) in the opened state displays at least one of the following elements: a selection menu (14), list elements and/or a selection list (13).

9. The operating system according to one of the preceding claims, wherein the input device (10) can be used to select information and/or selection elements that are displayed within the first information panel (5) in the opened state thereof.

10. The operating system according to one of Claims 2 to 9, wherein the display area is actuatable by the control apparatus in such a way
a) that the first information panel (5) in the opened state displays at least one of the following pieces of information: data relating to at least one vehicle checking function, such as for example state information relating to a brake lining, a vehicle battery, service intervals and/or data relating to vehicle settings, such as for example light settings, warning tone settings, voice settings; and/or
b) that the second information panel (6) in the opened state displays at least one of the following pieces of information: details and/or data relating to a telephone, a radio, a media device.

11. The operating system according to one of Claims 2 to 10, wherein the display area is actuatable by the control apparatus in such a way
a) that the second information panel (6) is enlarged by a curtain-like or drawer-like drawing-open movement in the direction of the vehicle display (7); and/or
b) that the second information panel (6) is enlarged by a lateral drawing-open movement in the direction of the vehicle display (7) that involves only the horizontal length of the second information panel changing and the height of the information panel remaining unchanged; and/or
c) that the vehicle display (7) is arranged centrally on the display area (2) in the closed state of the second information panel (6); and/or
d) that information and/or selection elements that are selectable by means of the input device (10) are displayed in the opened state of the second information panel (6); and/or
e) that the second information panel (6) in the opened state displays at least one of the following elements: a selection menu, list elements and/or a selection list.

12. A motor vehicle, in particular utility vehicle, comprising an operating system according to one of the preceding claims.

## Revendications

1. Système de commande pour un véhicule permettant de sélectionner et de sortir certaines fonctionnalités de véhicule et/ou informations, comprenant
un dispositif d'affichage (1) doté d'une surface d'affichage (2) ;
un dispositif d'entrée (10) pour le marquage et/ou la sélection d'un élément affiché sur la surface d'affichage par un utilisateur ;
un dispositif de commande (8) qui est accouplé au dispositif d'affichage (1) et au dispositif d'entrée (10) et permet de commander un affichage représentatif sur la surface d'affichage (2), la surface d'affichage (2) pouvant être pilotée par le dispositif de commande (8) de telle sorte que sur la surface d'affichage (2), un premier instrument rond (3) pour afficher un compte-tours ou un tachymètre, un affichage de véhicule (7) pour afficher au moins un état d'un système d'assistance au conducteur et/ou d'un environnement de véhicule et un premier volet d'information (5) disposé entre le premier instrument rond (3) et l'affichage de véhicule (7) sont affichés,
le premier volet d'information (5) pouvant être affiché au choix dans un état ouvert dans lequel le premier volet d'information (5) affiche des informations détaillées (13, 14) et dans un état fermé dans lequel le premier volet d'information (5) affiche une table des matières récapitulative indiquant des informations détaillées (13, 14) pouvant être affichées à l'état ouvert ;
dans lequel, au moyen d'un actionnement du dispositif d'entrée (10), un passage (W) de l'état fermé à l'état ouvert peut être déclenché, dans lequel, lors du passage (W), un mouvement d'ouverture animé (A) est généré dans lequel le premier volet d'information est agrandi par un mouvement de déploiement en direction de l'affichage de véhicule (7) tout en décalant l'affichage de véhicule (7) sur la surface d'affichage (2) de telle sorte que celui-ci reste affiché.

2. Système de commande selon la revendication 1, dans lequel la surface d'affichage (2) peut être pilotée par le dispositif de commande (8) de telle sorte que
a) le premier volet d'information (5) est agrandi par un mouvement de déploiement à la manière d'un rideau ou d'un tiroir en direction de l'affichage de véhicule (7) ; et/ou
b) le premier volet d'information (5) est agrandi par un mouvement de déploiement latéral en direction de l'affichage de véhicule (7) dans lequel seule la longueur horizontale du premier volet d'information (5) change et la hauteur du premier volet d'information (5) reste inchangée.

3. Système de commande selon la revendication 1 ou 2, dans lequel la surface d'affichage (2) peut être pilotée par le dispositif de commande (8) de telle sorte que
a) sur une première zone d'extrémité latérale (2a) de la surface d'affichage (2), le premier instrument rond (3) est affiché, et sur une deuxième zone d'extrémité latérale (2b) opposée à celle-ci, un deuxième instrument rond (4) est affiché ; et
b) entre le deuxième instrument rond (4) et l'affichage de véhicule (7), un deuxième volet d'information (6) est affiché,
le deuxième volet d'information (4) pouvant être affiché au choix dans un état ouvert dans lequel le deuxième volet d'information affiche des informations détaillées, et dans un état fermé dans lequel le deuxième volet d'information affiche une table des matières récapitulative indiquant des informations détaillées pouvant être affichées à l'état ouvert ;
dans lequel, au moyen d'un actionnement du dispositif d'entrée, un passage (W) de l'état fermé à l'état ouvert du deuxième volet d'information (6) peut être déclenché, dans lequel, lors du passage (W), un mouvement d'ouverture animé (A) est généré dans lequel le deuxième volet d'information (6) est agrandi par un mouvement de déploiement du volet d'information (6) en direction de l'affichage de véhicule (7) tout en décalant l'affichage de véhicule (7) sur la surface d'affichage (2) de telle sorte que celui-ci reste toujours affiché.

4. Système de commande selon la revendication 3, dans lequel la surface d'affichage (2) peut être pilotée par le dispositif de commande (8) de telle sorte que
a) lors du passage de l'état fermé à l'état ouvert du premier volet d'information (5), l'affichage de véhicule (7) est poussé sur une zone de la surface d'affichage (2) associée au deuxième volet d'information (6) de sorte qu'à l'état ouvert du premier volet d'information (5), le deuxième volet d'information (6) dans son état fermé est recouvert par l'affichage de véhicule (7) ; et/ou
b) lors du passage de l'état fermé à l'état ouvert du deuxième volet d'information (6), l'affichage de véhicule (7) est poussé sur une zone de la surface d'affichage (2) associée au premier volet d'information (5) de sorte qu'à l'état ouvert du deuxième volet d'information (6), le premier volet d'information (5) dans son état fermé est recouvert par l'affichage de véhicule (7).

5. Système de commande selon l'une quelconque des revendications précédentes, dans lequel la surface d'affichage (2) est un écran et le premier et/ou le deuxième instrument rond (3, 4) sont des instruments ronds numériques.

6. Système de commande selon l'une quelconque des revendications précédentes, dans lequel l'affichage de véhicule (2) à l'état fermé du premier volet d'information (5) est disposé au milieu sur la surface d'affichage (2).

7. Système de commande selon l'une quelconque des revendications précédentes, dans lequel le dispositif d'entrée (10) présente au moins un élément de commande disposé sur un volant multifonctions (9), ledit au moins un élément de commande présentant un cylindre (12) et au moins un bouton-poussoir (11a, 11b, 11c).

8. Système de commande selon l'une quelconque des revendications précédentes, dans lequel la surface d'affichage (2) peut être pilotée par le dispositif de commande (8) de telle sorte que le premier volet d'information (5) à l'état ouvert affiche au moins l'un des éléments suivants : un menu de sélection (14), des éléments de liste et/ou une liste de sélection (13).

9. Système de commande selon l'une quelconque des revendications précédentes, dans lequel, au moyen du dispositif d'entrée (10), des éléments d'information et/ou de sélection qui à l'état ouvert du premier volet d'information (5) sont affichés à l'intérieur de celui-ci peuvent être sélectionnés.

10. Système de commande selon l'une quelconque des revendications 2 à 9, dans lequel la surface d'affichage peut être pilotée par le dispositif de commande de telle sorte que
a) le premier volet d'information (5) à l'état ouvert affiche au moins l'une des informations suivantes : des données concernant au moins une fonction test de véhicule, comme par exemple des informations d'état concernant une garniture de frein, une batterie de véhicule, des intervalles de maintenance et/ou des données concernant des réglages de véhicule, comme par exemple des réglages de lumière, des réglages de signal sonore, des choix de langue ; et/ou
b) le deuxième volet d'information (6) à l'état ouvert affiche au moins l'une des informations suivantes : des indications et/ou des données concernant un téléphone, une radio, un appareil multimédia.

11. Système de commande selon l'une quelconque des revendications 2 à 10, dans lequel la surface d'affichage peut être pilotée par le dispositif de commande de telle sorte que
a) le deuxième volet d'information (6) est agrandi par un mouvement de déploiement à la manière d'un rideau ou d'un tiroir en direction de l'affichage de véhicule (7) ; et/ou
b) le deuxième volet d'information (6) est agrandi par un mouvement de déploiement latéral en direction de l'affichage de véhicule (7) dans lequel seule la longueur horizontale du deuxième volet d'information change et la hauteur du volet d'information reste inchangée ; et/ou
c) l'affichage de véhicule (7) à l'état fermé du deuxième volet d'information (6) est disposé au milieu sur la surface d'affichage (2) ; et/ou
d) à l'état ouvert du deuxième volet d'information (6), des éléments d'information et/ou de sélection sont affichés qui peuvent être sélectionnés au moyen du dispositif d'entrée (10) ; et/ou
e) le deuxième volet d'information (6) à l'état ouvert affiche au moins l'un des éléments suivants : un menu de sélection, des éléments de liste et/ou une liste de sélection.

12. Véhicule automobile, en particulier véhicule utilitaire, comprenant un système de commande selon l'une quelconque des revendications précédentes.
